# EUROPEAN PATENT APPLICATION

(11) **EP 3 718 747 A1**
(43) Date of publication of application: **07.10.2020**
(21) Application number: 19166766.6
(22) Date of filing: 02.04.2019
(51) Int. Cl.: B29C 64/205, B33Y 30/00, B33Y 10/00, B29C 64/153

(54) **APPARATUS FOR ADDITIVELY MANUFACTURING OF THREE-DIMENSIONAL OBJECTS**

(71) Applicant: Concept Laser GmbH, 96215 Lichtenfels (DE)
(72) Inventor: Vierling, Christoph, 96237 Ebersdorf (DE)
(74) Representative: Hafner & Kohl PartmbB

(57) **Abstract**

Apparatus (1) for additively manufacturing of three-dimensional objects (2) by means of successive layerwise selective irradiation and consolidation of layers of a build material (3) which can be consolidated by means of an energy source, which apparatus (1) comprises an application device (5) adapted to apply build material (3) in a build plane (6), **characterized by** a drive device (12) with at least one endless circumferential drive element (13) revolvable or revolving in a x-z-plane defined by an x-direction essentially extending in application direction and a z-direction essentially perpendicular to the x-direction, wherein at least one application element (17 - 22) is connected to the drive element (13).

## Description

The invention relates to an apparatus for additively manufacturing of three-dimensional objects by means of successive layerwise selective irradiation and consolidation of layers of a build material which can be consolidated by means of an energy source, which apparatus comprises an application device adapted to apply build material in a build plane.

Such apparatuses in which a build material is layerwise applied in a build plane to be selectively consolidated, for example upon irradiation with a corresponding energy source, such as a laser beam or an electron beam, are generally known from prior art. The build material is usually applied in the build plane via an application element of the application device that is moved relative to the build plane, wherein the application element picks up build material in a first region of the apparatus, for example from a dose plane, and conveys the build material to a second region, e.g. the build plane. The application element, for example a rake or a coater blade, distributes the build material evenly in the build plane.

Further, it is known from prior art that after the application element distributed the build material in the build plane, the application element has to be moved back into an initial position, for example next to the first region in which the application element picks up build material. The movement of the application element back to the initial position requires time in which the additive manufacturing process cannot be performed, in particular in which build material cannot be irradiated in the build plane, as the application element has to pass the build plane on the way back to the initial position. Therefore, a downtime of an irradiation device of the apparatus is necessary, as build material that has already been applied in the build plane cannot instantly be irradiated, as the application element has to be moved over the build plane to reach the initial position.

Additionally, the movement of the application element back to the initial position cannot be performed with an arbitrary velocity, as the (powdery) build material that has been applied in the build plane could be influenced by the application element, for example build material could be stirred up with the application element being moved too fast over the build plane.

Thus, it is an object of the invention to provide an apparatus for additively manufacturing of three-dimensional objects, wherein the application of build material is improved, in particular wherein downtimes of the apparatus can be reduced.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The inventive apparatus further comprises an application device with which, as described before, build material is applied onto a build plane to be selectively consolidated, for example upon the irradiation with a corresponding energy source. The invention is based on the idea that the drive device of the apparatus comprises at least one endless circumferential drive element revolvable or revolving in a plane defined by an x-direction essentially extending in application direction and a z-direction essentially perpendicular to the x-direction, wherein at least one application element is connected to the drive element. According to the invention, the at least one application element that is connected to the at least one drive element is moved in a driven movement in the x- and z-plane, wherein the term "x-direction" refers to a direction essentially parallel to the build plane , e.g. directed in the application direction in which build material is applied. The term "z-direction" refers to a direction essentially perpendicular to the build plane, for example a build direction in which the object is successively layerwise built.

Thus, according to the invention, it is not necessary to move the at least one application element on the same way (in the opposite direction) back to the initial position on which way the application element is moved to convey the build material to the build plane (and distribute the build material in the build plane). Instead, the at least one application element is revolved in the x-z-plane and reaches the initial position again at the end of the revolving movement. The drive element is an endless circumferential drive element, for example a belt that is guided in the x-z-plane carrying the application element that is connected to the drive element. Since the drive element is endless circumferential, the starting point or end point of the revolving movement can be chosen arbitrarily, e.g. an initial position of the application element.

In other words, the application element is guided via the drive element to which it is connected from the initial position over the build plane (or along the build plane) and is afterwards revolved back into the initial position. The movement of the at least one application element and the drive element therefore, describes a closed loop in the x-z-plane, wherein the loop is arranged with at least one section of the loop in application direction (at least essentially parallel to the build plane). Hence, the drive element is arranged in a closed (endless circumferential) loop in the x-z-plane. Due to the movement of the drive element, the at least one application element is also moved along the loop in the x-z-plane.

For example, the drive element and the application element may revolve around a build module in which a carrying element is arranged that carries the powder bed (containing the additively built object and non-consolidated build material surrounding the additively built object). The apparatus may, in particular, comprise a dose module, a build module and an overflow module, wherein the drive element preferably revolves or is revolvable around all three modules, wherein build material is picked up via the at least one application element in the dose plane which is provided by the dose module. The build material picked up from the dose plane is afterwards conveyed to and distributed in the build plane. Excess build material is further conveyed to the overflow module, wherein the excess build material is depleted in an overflow opening receiving the excess build material. After the overflow module has been passed, the drive element and the application element are revolved or revolve around the assembly of the dose module, the build module and the overflow module, wherein at the end of the revolving movement the application element is back in the initial position, for example next to the dose plane.

Thus, in general two options are available for moving the at least one application element back to the initial position, wherein in a first alternative the drive element revolves above the build plane, i.e. the loop is arranged above the build plane and according to a second alternative the drive element revolves around the build plane, i.e. the loop encloses or extends around the build plane, wherein the section of the loop in which the application element is moved back to the initial position is arranged below the build plane.

The drive device may be adapted to linearly drive the at least one drive element. Thus, the at least one application element connected to the at least one drive element is driven in a linear movement relative to the build plane. The at least one drive element therefore, is driven in a linear movement relative to at least one side of the build module that comprises the build plane. As the at least one drive element may revolve around the build module in a linear movement, preferably the drive element is driven linearly alongside at least one other side, in particular wall portion, of the build module, as well.

Thus, the movement performed by the application element while the application element applies build material is a linear movement and not a rotary movement. In particular, the movement of the drive element and the at least one application element may consist of multiple sections, wherein the sections may extend in different directions. The drive element and the application element are moved linearly in all sections, wherein it is possible that the drive element and the application element perform a rotary movement, in particular in a transition section between two sections.

The drive device may further be adapted to revolve the at least one drive element in application direction. Thus, the at least one drive element may be revolved or revolvable in the x-z-plane, wherein the direction of the revolving movement is directed in application direction. As described before, the term "application direction" refers to the x-direction, i.e. the direction in which the at least one application element is moved to convey build material to and distribute the build material in the build plane. Preferably, the direction of rotation of the revolving movement is exclusively directed in x-direction or application direction, respectively. Of course, the revolving movement may comprise sections in which the drive element is driven against application direction or relative to the application direction, but the direction of rotation of the revolving movement preferably is always directed in application direction. The term "directed in application direction" with respect to a rotating movement is to be understood as the application direction extending tangentially or parallel to at least one section of the drive element being driven in the rotating or revolving movement, in particular in the area of the build plane. Hence, the loop the drive element is arranged in rotates in application direction.

According to a preferred embodiment of the inventive apparatus, the application device comprises at least two application elements that are connected to the at least one drive element, wherein the at least two application elements are arranged in series. Thus, not only one application element is connected to the drive element, but the application device comprises at least two application elements that are connected to the drive element or to the at least one drive element, respectively. Due to the driven movement of the drive element, the application elements connected to the drive element are also driven together with the drive element, wherein each application element is adapted to convey build material and distribute the build material in the build plane.

The use of more than one application element reduces the time required to bring one of the (individual) application elements back to the initial position. After a first application element has depleted the build material in the build plane at least one second application element may already reach the initial position to pick up build material. Thus, it is not necessary to wait for the first application element to arrive in the initial position. Of course, multiple application elements can be connected to the drive element, wherein build material can be conveyed via the application elements connected in series. The use of more than one application element further reduces the wear of each individual application element, as the number of application steps (number of times each application element applies build material in the build plane) is reduced by dividing the application steps on all application elements used. Thus, maintenance intervals that are typically required due to the wear of the application element can be prolonged significantly.

Further, the at least two application elements connected to the at least one drive element may be adapted to convey build material from a common dose plane to a common build plane in succession. Thus, all application elements that are assigned to the same drive element use the same, in particular a common dose plane, from which a build material is picked up and conveyed to the same build plane, in particular a common build plane. As the at least two application elements connected to the same drive element pass the dose plane and the build plane in succession, the second application element may convey build material to the build plane before the first application element has reached the initial position again.

Hence, after the first application element applied build material in the build plane, an irradiation step can be performed to selectively consolidate the layer of build material previously applied by the first application element in the build plane. Subsequently, a second application element may apply a second layer of build material in the build plane and afterwards another application element or the first application element may apply another layer of build material in the build plane, wherein the second layer of build material can be irradiated after the second application element passed the corresponding area of the build plane. Of course, an arbitrary number of different application elements can be provided, wherein between the application steps performed by two different application elements, an irradiation process can be performed, as described before. Of course, it is also possible to use only one application element, wherein after the single application element passed the build plane, an irradiation step can be instantly be performed without the need to wait for the application element to reach the initial position.

Preferably, after one application element has passed the build plane or reaches the end of the build plane in application direction, respectively, the succeeding application element may be arranged in a "ready position" in which the succeeding application element has already picked up build material and is positioned next to the build plane ready to apply build material in the build plane. In particular, the number of application elements may depend on the size of the build plane. Thus, as many application elements are connected to the drive element that it is ensured that, if a preceding application element passed the build plane a succeeding application element is arranged in the ready position.

According to another embodiment of the inventive apparatus, the at least two application elements may be arranged in a defined distance along the drive element, in particular the distance between at least two application elements is equal. Thus, preferably an equidistant arrangement of the application elements on the drive element can be adjusted. Thus, as described before, the additive manufacturing process can be performed more efficiently, as build material can be irradiated after an application element finished applying build material in the build plane. Hence, the time required to move the application element back to the initial position is not lost, as each application element is moved back to the initial position in the revolving movement in which the application element does not have to pass the build plane.

The distance or the number of application elements may be defined dependent on at least one parameter relating to an irradiation time and/or a process gas parameter and/or a swirling of build material in a process plane of the apparatus. As described before, besides the size of the build plane, the number of application elements connected to the drive element and connected therewith the distance between at least two application elements connected to the drive element, may be defined dependent on the at least one parameter. The at least one parameter may relate to an irradiation time that is required to irradiate a layer of build material. Thus, build material can be irradiated between two application steps, in particular after fresh build material has been applied in a section of the build plane that has to be irradiated. The at least one parameter may further relate to a process gas parameter, for example a streaming velocity of process gas inside the process chamber and/or a swirling of build material in the process plane. The swirling of build material needs to be avoided, since it may negatively influence the process quality.

Further, the velocity with which the drive element(s) and the application element(s) are moved relative to the build plane may also be taken into calculation or can also influence the application of build material. Preferably, the drive device may be adapted to adjust the velocity the at least one drive element is driven dependent on at least one process parameter, in particular an irradiation time and/or an amount of build material required to be applied in the build plane. Thus, dependent on the irradiation pattern, i.e. the irradiation time required to properly irradiate the build material of the current layer, the drive device may be adapted to adjust the velocity with which the at least one drive element is driven. Thus, if a defined irradiation time is required, the at least one drive element and therefore, the at least one application element, are driven with a defined velocity to allow for the corresponding layer of build material to be selectively irradiated. It is also possible to stop the drive element, if the irradiation step is not finished and to continue the movement of the drive element after the irradiation step is finished.

Thus, the drive element can be moved dependent on the time that is required to irradiate the build material in the build plane, wherein the additive manufacturing process can be performed more efficiently, as the application of build material can be adapted to the time that is required to irradiate the build material. Additionally or alternatively, it is also possible to engage and/or disengage the at least one application element from the at least one drive element. Thus, the at least one application element may be disengaged from the drive element(s) with which the application element is moved in application direction. For example, the drive element(s) may be moved with a constant velocity in application direction, wherein the application element(s) may be stopped and disengaged from the drive element(s), e.g. if an irradiation step requires a defined irradiation time that is longer as the time the at least one application element requires to be moved to the build plane. After the irradiation step is finished, the application element(s) can be engaged with the drive element(s) again.

The at least one drive element may be arranged revolving or revolvable in the x-z-plane above or around the build chamber and/or the dose chamber and/or an overflow chamber. As described before, the drive element may be revolvable around all three modules or revolvable in the x-z-plane above the three modules, wherein build material is picked up via the at least one application element in the dose plane which is provided by the dose module. The build material picked up from the dose plane is afterwards conveyed to and distributed in the build plane provided by the build module. Excess build material is further conveyed to the overflow module, wherein the excess build material is depleted in an overflow opening receiving the excess build material. After the overflow module has been passed the drive element and the application element are revolved or revolve around the assembly of the dose module, the build module and the overflow module, wherein at the end of the revolving movement the application element is back in the initial position, for example next to the dose plane.

According to another embodiment of the apparatus, at least one deflection element may be provided that is adapted to deflect the at least one drive element, in particular at least four deflection elements that are adapted to deflect the at least one drive element in two corners of the dose module and the build module or the overflow module. For example, the drive element may be guided around two deflection elements that are arranged above the process plane of the apparatus, wherein the application elements revolve around the two deflection elements together with the drive element in the x-z-plane. It is also possible to have more than two deflection elements, for example three deflection elements guiding the drive element in a triangular shape, for instance. However, the deflection elements are provided in transition sections between two sections of the movement path of the drive element. The deflection elements therefore, deflect the drive element between two segments, wherein the movement direction is changed via the deflection element.

According to a preferred embodiment, four deflection elements are provided that are arranged in two corners of the dose module and/or two corners of the build module and/or two corners of the overflow module, respectively. Thus, in two corners of the dose module and two corners of the build module or the overflow module one deflection element may be arranged, essentially building a rectangle. The term "in a corner" in the scope of this application refers to a deflection of the drive element in the area of a corner of the respective module. Thus, the deflection elements do not have to be arranged exactly in the corner of the respective module. Instead, it is possible to arrange the deflection elements in a defined distance to a corresponding corner.

The at least one drive element may be built as or comprise at least one belt element, in particular a tooth belt. The respective belt may be tensioned by arranging or positioning the previously mentioned deflection elements, wherein, in particular, the deflection elements may be driven to drive the drive element. For example, one or more of the deflection elements may be connected to a respective drive mechanism, such as a motor.

The at least one drive element may further, comprise multiple, preferably four, drive element sections that are arranged around or above the build module, preferably forming a rectangle, wherein one drive element section extends essentially parallel to the build plane. Thus, the drive element arranged in the x-z-plane may form a rectangle as it is deflected via four deflection elements. One part of moving path or one section of the drive element essentially extends parallel to the build plane (in x-direction). Of course, the drive element is revolved and moved relative to the build plane, wherein the term "section of the drive element" refers to the part of the movement path the drive element is moved through.

Besides, the invention relates to an application device for an apparatus for additively manufacturing of three-dimensional objects by means of successive layerwise selective irradiation and consolidation of layers of a build material which can be consolidated by means of an energy source, in particular for an inventive apparatus, as described before, which application device is adapted to apply build material in a build plane of the apparatus, wherein a drive device with at least one endless circumferential drive element is provided, which drive element is revolvable or revolving in a x-z-plane defined by an x-direction essentially extending in application direction and a z-direction essentially perpendicular to the x-direction, wherein at least one application element is connected to the drive element.

Further, the invention relates to a method for operating at least one apparatus for additively manufacturing of three-dimensional objects by means of successive layerwise selective irradiation and consolidation of layers of a build material which can be consolidated by means of an energy source, in particular an inventive apparatus, as described before, which apparatus comprises an application device adapted to apply build material in a build plane of the apparatus, wherein at least one endless circumferential drive element is revolved in a x-z-plane defined by an x-direction essentially extending in application direction and a z-direction essentially perpendicular to the x-direction, wherein at least one application element is connected to the drive element.

In a preferred embodiment of the inventive method, build material may be picked up by at least one application element that is connected to the drive element. Due to the revolving movement of the drive element, which comprises at least one section that is arranged essentially in parallel to the build plane, build material can be moved via the at least one application element as it is moved in application direction. Thus, build material may be conveyed to the build plane and distributed in the build plane. After the respective application element passed the build plane, the application element is returned to the initial position following the drive element that circumferentially revolves in the x-z-plane.

Preferably, multiple application elements are provided, wherein the application elements are moved in succession over a dose plane, in which the application elements pick up build material and over a build plane to which the build material is conveyed and in which the build material is distributed. Afterwards, the application elements may be guided over an overflow opening provided by an overflow module, to deplete the excess build material.

Of course, all details, features and advantages described with respect to the inventive apparatus are fully transferable to the inventive application device and the inventive method. In particular, the inventive method may be performed on the inventive apparatus, preferably using an inventive application device.

Exemplary embodiments of the invention are described with reference to the Fig. The Fig. are schematic diagrams, wherein
- Fig. 1: shows an inventive apparatus according to a first embodiment;
- Fig. 2: shows a top view of the inventive apparatus of Fig. 1; and
- Fig. 3: shows an inventive apparatus according to a second embodiment.

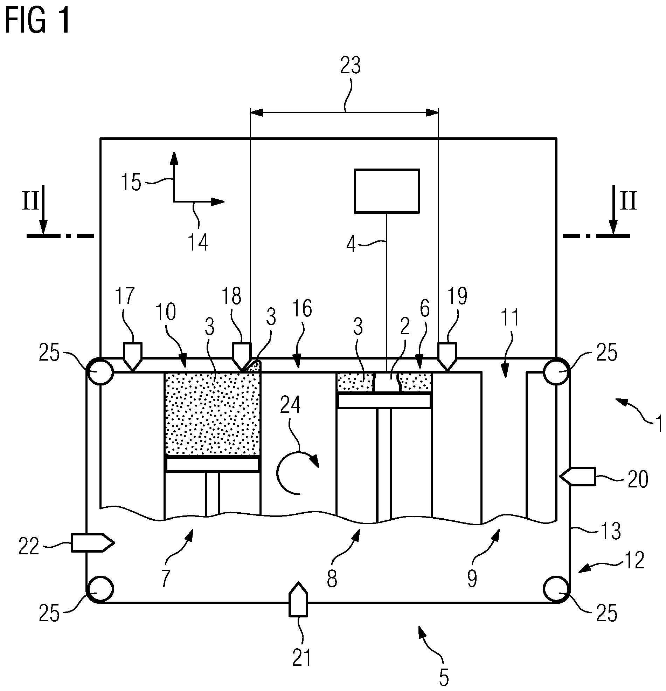

Fig. 1 shows an apparatus 1 for additively manufacturing of three-dimensional objects 2 by means of successive layerwise selective consolidation of layers of a build material 3. The build material 3 can be consolidated by means of an energy source, for example a laser source, in particular the build material 3 can be selectively consolidated via an irradiation of respective regions with an energy beam 4, such as a laser beam or an electron beam. The apparatus 1 comprises an application device 5 that is adapted to apply build material 3 in a build plane 6.

The apparatus 1 optionally comprises a dose module 7, a build module 8 and an overflow module 9, wherein the dose module 7 provides a dose plane 10 from which build material can be picked up and conveyed to the build plane 6 that is provided via the build module 8 in this exemplary embodiment. The optional overflow module 9 provides an overflow opening 11 in which excess material 3 can be depleted.

The application device 5 of the apparatus 1 comprises a drive device 12 with two endless circumferential drive elements 13 that are revolvably or revolving arranged in a x-z-plane. The x-z-plane is defined by an x-direction, as indicated by arrow 14, and a z-direction, as indicated by arrow 15. As can be derived from Fig. 1, the x-direction essentially extends in parallel to the build plane 6, or a process plane 16 of the apparatus 1. The x-direction can also be referred to as application direction, as will be described below. The z-direction extends essentially perpendicular to the build plane 6, or the process plane 16, respectively.

The two drive elements 13 (only one drive element 13 visible due to the side view) are, according to this embodiment, essentially arranged forming a rectangular loop that revolves endlessly around the dose module 7, the build module 8 and the overflow module 9. The specific arrangement of the drive device 12 is, of course, optional and can be arbitrarily changed, as long as an endless circumferential drive element 13 is provided that is arranged in the x-z-plane.

As is further derivable from Fig. 1, multiple application elements 17 - 22 are connected to the drive elements 13. Thus, the application elements 17 - 22 are moved together with the drive elements 13, as the application elements 17 - 22 are coupled to the drive elements 13. Preferably, a distance between two application elements 17 - 22, as exemplarily indicated via line 23 between the application elements 18 and 19, is adjusted equidistant. For the sake of simplicity, the distances between the individual application elements 17 - 22 are not drawn equidistantly but are to be understood as being equidistant. In other words, the application elements 17 - 22 are revolved following the drive elements 13, wherein the section of the drive device 12 that extends parallel to the process plane 16, in particular the build plane 6, is driven along arrow 14, thus, in x-direction.

The revolving movement of the drive elements 13 and the application element 17 - 22 can therefore, be deemed as in application direction or in x-direction. Of course, the respective application elements 17 - 22 that are currently arranged in other sections, are not moved in x- direction. For example, in the situation that is depicted in Fig. 1, the application element 20 is moved against z-direction (against arrow 15), wherein the application element 21 is moved against x-direction (against arrow 14) and the application element 22 is moved in z-direction (along arrow 15). However, a rotation direction of the drive elements 13 as indicated via arrow 24, is deemed as "in application direction" or "in x-direction".

To arrange the drive elements 13 in the rectangular shape, or in other words in forming the loop in the x-z-plane, four deflection elements 25 are provided, wherein two deflection elements 25 are arranged in the area of two corners of the dose module 7 and the overflow module 9, as the dose module 7 and the overflow module 9 are merely optional, the deflection elements 25 could also be arranged in respective corners of the build module 8 or in any other arbitrary manner that allow for the drive elements 13 to be arranged in the x-z-plane. In particular, it is not necessary to provide four deflection elements 25, it is also possible to have any other arbitrary number of deflection elements 25, for example three.

To apply build material 3 in the build plane 6, an application element 17 - 22 is moved from an initial position next to the dose plane 10, for example the position in which the application element 17 is depicted. The respective application element 17 - 22 is moved over the dose plane 10 to pick up fresh build material 3 and convey the build material 3 towards the build plane 6. The position, in which the application element 18 is drawn in Fig. 1, can be deemed as "ready position", as the application element 18 already picked up build material 3 and is ready to convey the build material 3 towards the build plane 6 and to distribute the build material 3 in the build plane 6.

After the respective application element 17 - 22 passed the build plane 6, the build material 3 picked up via the application element 17 - 22 has been applied and distributed in the build plane 6. The application element 19, for example, is drawn in a position, in which the application element 17 - 22 passed the build plane 6. Subsequently, excess build material 3 (not shown) can be conveyed further and depleted into the overflow opening 11 of the overflow module 9. Afterwards, the respective deflection element 25 deflects the guide element 13 in that the application element 17 - 22 that passed the overflow opening 11 are deflected and guided along the revolving movement path back to the initial position in which for example the application element 17 is drawn, as described before.

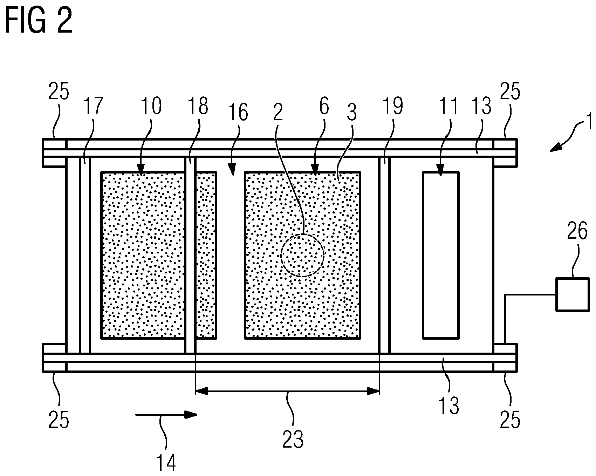

Fig. 2 shows a top view on the process plane 16 of the apparatus 1 of Fig. 1. As can be derived from Fig. 2, each application element 17 - 22 is connected to both drive elements 13 that are, for example, built as belts, in particular tooth belts. As described before, the distance 23 between the application elements 17 - 22 is to be understood as equidistant although, the distance 23 is not drawn equidistantly throughout the Fig. The distance between the application elements 17 - 22, for example indicated via line 23 between the application elements 18 and 19, is preferably chosen in that a preceding application element 17 - 22, for example the application element 19, as depicted in Fig. 2, already passed the build plane 6, wherein a succeeding application element 17 - 22, for example the application element 18, is in the "ready position". In other words, in the situation that is depicted in Fig. 2, the application element 19 is regarded as the preceding application element 19 with regard to the succeeding application element 18. Of course, each pair of the preceding/succeeding application elements 17 - 22, such as the application element 17, 18 or 19, 20 or 20, 21 and so on, can be regarded as preceding/succeeding application elements 17 - 22. In particular, the distance 23 between each two succeeding/preceding application elements 17 - 22 may be the same distance as indicated via line 23.

By having the succeeding application element 18 in the ready position, as soon as the preceding application element 19 passed the build plane 6, the irradiation process can be performed to irradiate build material 3 arranged in the build plane 6. Afterwards, the next layer of build material 3 can be applied via the succeeding application element 18. Thus, process time can be saved, as the application process and the irradiation process can be performed in succession without the need to wait for the application element 17 - 22 to be brought back to its initial position.

It is also possible to define the distance 23 shorter or longer in that, for example, the succeeding application element 18 already started the application process, in other words is already moved over the build plane 6, before the preceding application element 19 passed the build plane 6. Thus, the distance 23 between two preceding/succeeding application elements 17 - 22 can be chosen in that the irradiation process of the corresponding layer of build material 3 arranged in the build plane 6 can be performed in the "gap" between two application elements 17 - 22.

Besides, it is also possible to adjust the velocity the drive elements 13 are revolved in the x-z-plane. It is particularly possible to stop the drive elements 13, if the irradiation process of the corresponding layer of build material 3 is not yet finished and to continue the movement of the drive elements 13 as soon as the irradiation process is finished. Additionally or alternatively, it is also possible to engage and/or disengage the at least one application element 17 - 22 from the at least one drive element 13 13. Thus, the at least one application element 17 - 22 may be disengaged from the drive element(s) 13 with which the application element 17 - 22 is moved in application direction. For example, the drive element(s) 13 may be moved with a constant velocity in application direction, wherein the application element(s) 17 - 22 may be stopped and disengaged from the drive element(s) 13, e.g. if an irradiation step requires a defined irradiation time that is longer as the time the at least one application element 17 - 22 requires to be moved to the build plane. 6 After the irradiation step is finished, the application element(s) 17 - 22 can be engaged with the drive element(s) 13 again.

To drive the drive elements 13, for example a drive mechanism, such as a motor 26 is coupled with at least one deflection element 25. Of course, the drive element 13 can in any arbitrary other way be coupled with a corresponding drive mechanism 26, for example directly.

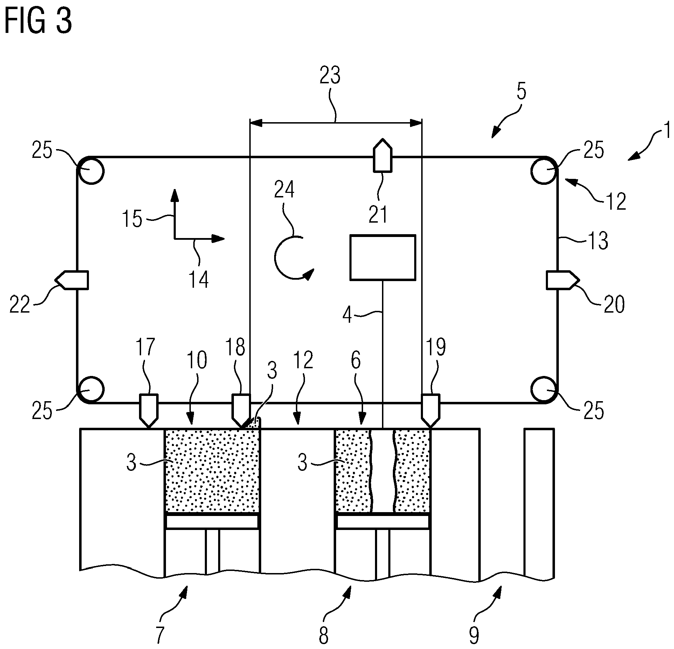

Fig. 3 shows an apparatus 1 according to a second exemplary embodiment, wherein same numerals are used for same parts. As depicted in Fig. 3, the apparatus 1 also comprises an application device 5, comprising a drive device 12, essentially set up the same way, as the application device 5 depicted in Fig. 1. The drive device 12 is also arranged in that the two drive elements 13 are endless circumferential drive elements 13, which are arranged revolvable or revolving in the x-z-plane, defined by the x-direction (arrow 14) and the z-direction (arrow 15). Again, application elements 17 - 22 are coupled to or connected with the drive elements 13.

Deviant from the embodiment described with respect to Fig. 1, the drive device 12 is arranged above the process plane 16. Thus, a first section of the drive elements 13, in which the application elements 17 - 19 are drawn, is moved in a first direction (arrow 14), wherein a succeeding section, in which the application element 20 is drawn is moved in z-direction (arrow 15). A third section of the movement path of the drive elements 13, in which in the situation depicted in Fig. 3 the application element 21 is drawn, is moved against application direction (against arrow 14). Further, a fourth section of the movement path of the drive elements 13 is provided, in which the application element 22 is drawn, which extends essentially against the z-direction (against arrow 15). The rotation direction of the loop that is formed via the four sections of the movement path of the drive elements 13 is defined with respect to the section that extends along the process plane 16 of the apparatus 1. Hence, the rotation direction is also depicted by arrow 24.

Self-evidently, the inventive method may be performed on the inventive apparatus 1, depicted in the Fig. 1 - 3. All details, features and advantages described with respect to the inventive apparatus 1 and the inventive application device 5 described with respect to the individual embodiments are fully transferable and exchangeable.

## Claims

1. Apparatus (1) for additively manufacturing of three-dimensional objects (2) by means of successive layerwise selective irradiation and consolidation of layers of a build material (3) which can be consolidated by means of an energy source, which apparatus (1) comprises an application device (5) adapted to apply build material (3) in a build plane (6), **characterized by** a drive device (12) with at least one endless circumferential drive element (13) revolvable or revolving in an x-z-plane defined by an x-direction essentially extending in application direction and a z-direction essentially perpendicular to the x-direction, wherein at least one application element (17 - 22) is connected to the drive element (13).

2. Apparatus according to claim 1, **characterized in that** the drive device (12) is adapted to linearly drive the at least one drive element (13).

3. Apparatus according to claim 1 or 2, **characterized in that** the drive device (12) is adapted to revolve the at least one drive element (13) in application direction.

4. Apparatus according to one of the preceding claims, **characterized in that** the application device (5) comprises at least two application elements (17 - 22) that are connected to the at least one drive element (13), wherein the at least two application elements (17 - 22) are arranged in series.

5. Apparatus according to one of the preceding claims, **characterized in that** the at least two application elements (17 - 22) connected to the at least one drive element (13) are adapted to convey build material (3) from a common dose plane (10) to a common build plane (6) in succession.

6. Apparatus according to one of the preceding claims, **characterized in that** the at least two application elements (17 - 22) are arranged in a defined distance (23) along the drive element (13), in particular the distance (23) between at least two application elements (17 - 22) is equal.

7. Apparatus according to one of the preceding claims, **characterized in that** the distance (23) or a number of application elements (17 - 22) is defined dependent on at least one parameter relating to an irradiation time and/or a process gas parameter and/or a swirling of build material (3) in a process plane (16).

8. Apparatus according to one of the preceding claims, **characterized in that** the drive device (12) is adapted to adjust a velocity the at least one drive element (13) is driven dependent on at least one process parameter, in particular an irradiation time and/or an amount of build material (3) required to be applied in the build plane (6).

9. Apparatus according to one of the preceding claims, **characterized in that** the at least one drive element (13) is arranged revolving or revolvable in the x-z-plane above or around the build chamber of a build module (8) and/or the dose chamber of a dose module (7) and/or an overflow chamber of an overflow module (9).

10. Apparatus according to one of the preceding claims, **characterized by** at least one deflection element (25) adapted to deflect the at least one drive element (13), in particular at least four deflection elements (25) adapted to deflect the at least one drive element (13) in two corners of the dose module (7) and/or the build module (8) and/or the overflow module (9).

11. Apparatus according to one of the preceding claims, **characterized in that** the at least one drive element (13) is built as or comprises at least one belt element, in particular a tooth belt.

12. Apparatus according to one of the preceding claims, **characterized in that** the at least one drive element (13) comprises multiple, preferably four, drive element sections that are arranged around the build module (8), preferably forming a rectangle, wherein one drive element section extends essentially parallel to the build plane (6).

13. Application device (5) for an apparatus (1) for additively manufacturing of three-dimensional objects (2) by means of successive layerwise selective irradiation and consolidation of layers of a build material (3) which can be consolidated by means of an energy source, in particular for an apparatus (1) according to one of the preceding claims, which application device (5) is adapted to apply build material (3) in a build plane (6) of the apparatus (1), **characterized by** a drive device (12) with at least one endless circumferential drive element (13) revolvable or revolving in a x-z-plane defined by an x-direction essentially extending in application direction and a z-direction essentially perpendicular to the x-direction, wherein at least one application element (17 - 22) is connected to the drive element (13).

14. Method for operating at least one apparatus (1) for additively manufacturing of three-dimensional objects (2) by means of successive layerwise selective irradiation and consolidation of layers of a build material (3) which can be consolidated by means of an energy source, in particular an apparatus (1) according to one of the claims 1 to 12, which apparatus (1) comprises an application device (5) adapted to apply build material (3) in a build plane (6) of the apparatus (1), **characterized in that** at least one endless circumferential drive element (13) is revolved in a x-z-plane defined by an x-direction essentially extending in application direction and a z-direction essentially perpendicular to the x-direction, wherein at least one application element (17 - 22) is connected to the drive element (13).

15. Method according to claim 14, **characterized by**
- moving the at least one application element (17 - 22) in application direction
- distributing build material (3) in the build plane (6)
- returning the at least one application element (17 - 22) circumferentially revolving in the x-z-plane
